# EUROPEAN PATENT APPLICATION

(11) **EP 4 780 077 A1**
(43) Date of publication of application: **22.07.2026**
(21) Application number: 24907868.4
(22) Date of filing: 29.11.2024
(51) Int. Cl.: H04W 48/08, H04W 48/16, H04W 8/00, H04W 76/14, H04L 61/4511, H04L 61/5069, H04W 84/12, H04W 88/02

(54) **ELECTRONIC DEVICE AND COMMUNICATION METHOD THEREOF**

(30) Priority: 22.12.2023 KR 20230189679; 12.01.2024 KR 20240005440
(71) Applicant: Samsung Electronics Co., Ltd., Suwon-si, Gyeonggi-do 16677 (KR)
(72) Inventor: SEO, Jungkuk, Suwon-si Gyeonggi-do 16677 (KR)
(74) Representative: Gulde & Partner
(86) International application number: PCT/KR2024/019294
(87) International publication number: WO 2025/135583

(57) **Abstract**

An electronic device and a communication method thereof are disclosed. A method for operating an electronic device (101, 201), according to one embodiment, may include an operation of activating a wireless local area network (WLAN) hotspot function of the electronic device (101, 201). The method may include an operation of transmitting a first multicast domain name system (mDNS) message requesting device information to an external electronic device (203) while a network connection is provided to the external electronic device (203), on the basis of the activation of the WLAN hotspot function. The method may include an operation of receiving a second mDNS message including device information of the external electronic device (203) from the external electronic device (203) while a network connection is provided to the external electronic device (203), on the basis of the activation of the WLAN hotspot function. The method may include an operation of providing device type information of the external electronic device (203) on a display of the electronic device (101, 201), on the basis of the device information included in the second mDNS message. Various other embodiments may be possible.

## Description

### TECHNICAL FIELD

The following description relates to an electronic device and a communication method thereof.

### BACKGROUND ART

Various communication standards, such as wireless local area network (WLAN), Bluetooth, or near field communication (NFC), may be used to communicate among wireless communication devices in a short distance.

Each wireless communication device may transmit its device information (e.g., a device name) to other devices via communication.

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

An electronic device 101, 201 according to an embodiment may include at least one processor 120, and memory 130 storing instructions. The instructions, when individually or collectively executed by the at least one processor 120, may cause the electronic device 101, 201 to activate a wireless local area network (WLAN) hotspot function of the electronic device 101, 201. The instructions, when executed by the at least one processor 120, may cause the electronic device 101, 201 to, while a network connection is provided to an external electronic device 203 based on activation of the WLAN hotspot function, transmit a first multicast domain name system (mDNS) message for requesting device information to the external electronic device 203. The instructions, when individually or collectively executed by the at least one processor 120, may cause the electronic device 101, 201 to, while the network connection is provided to the external electronic device 203 based on the activation of the WLAN hotspot function, receive a second mDNS message including the device information of the external electronic device 203 from the external electronic device 203, The instructions, when individually or collectively executed by the at least one processor 120, may cause the electronic device 101, 201 to, based on the device information included in the second mDNS message, provide device type information of the external electronic device 203 on a display of the electronic device 101, 201.

A method of operating an electronic device 101, 201 according to an embodiment may include activating a WLAN hotspot function of the electronic device 101, 201. The method may include, while a network connection is provided to an external electronic device 203 based on activation of the WLAN hotspot function, transmitting a first mDNS message for requesting device information to the external electronic device 203. The method may include, while the network connection is provided to the external electronic device 203 based on the activation of the WLAN hotspot function, receiving a second mDNS message including the device information of the external electronic device 203 from the external electronic device 203. The method may include, based on the device information included in the second mDNS message, providing device type information of the external electronic device 203 on a display of the electronic device 101, 201.

An electronic device 101, 201 according to an embodiment may include at least one processor 120, and memory 130 storing instructions. The instructions, when individually or collectively executed by the at least one processor 120, may cause the electronic device 101, 201 to activate a WLAN hotspot function of the electronic device 101, 201. The instructions, when individually or collectively executed by the at least one processor 120, may cause the electronic device 101, 201 to, while a network connection is provided to an external electronic device 203 based on activation of the WLAN hotspot function, obtain a device type of the external electronic device 203 based on an mDNS protocol.

According to an embodiment, a non-transitory computer-readable storage medium storing one or more computer programs may include instructions that cause a processor to perform the method.

### BRIEF DESCRIPTION OF DRAWINGS

FIG. 1 is a block diagram of an electronic device in a network environment according to an embodiment.
FIG. 2 is a diagram illustrating a network environment according to an embodiment.
FIG. 3 is a flowchart of a process for network connection according to an embodiment.
FIG. 4 is a flowchart of a process of providing device information according to an embodiment.
FIG. 5 is a diagram illustrating a user interface (UI) according to an embodiment.
FIG. 6 is a flowchart of a process of providing device information according to an embodiment.
FIG. 7 is a diagram illustrating a UI according to an embodiment.
FIG. 8 is a diagram illustrating a UI according to an embodiment.
FIG. 9 is a flowchart of a procedure to exchange a multicast domain name system (mDNS) message according to an embodiment.
FIG. 10 is a diagram illustrating an example of blocking an mDNS message according to an embodiment.
FIG. 11 is a flowchart of an mDNS message exchange procedure according to an embodiment.
FIG. 12 is a diagram illustrating data traffic control according to an embodiment.
FIG. 13 is a flowchart illustrating an operation of an electronic device according to an embodiment.
FIG. 14 is a flowchart illustrating an operation of an electronic device according to an embodiment.

### MODE FOR CARRYING OUT THE INVENTION

Hereinafter, embodiments are described in detail with reference to the accompanying drawings. When describing the embodiments with reference to the accompanying drawings, like reference numerals refer to like components and a repeated description related thereto will be omitted.

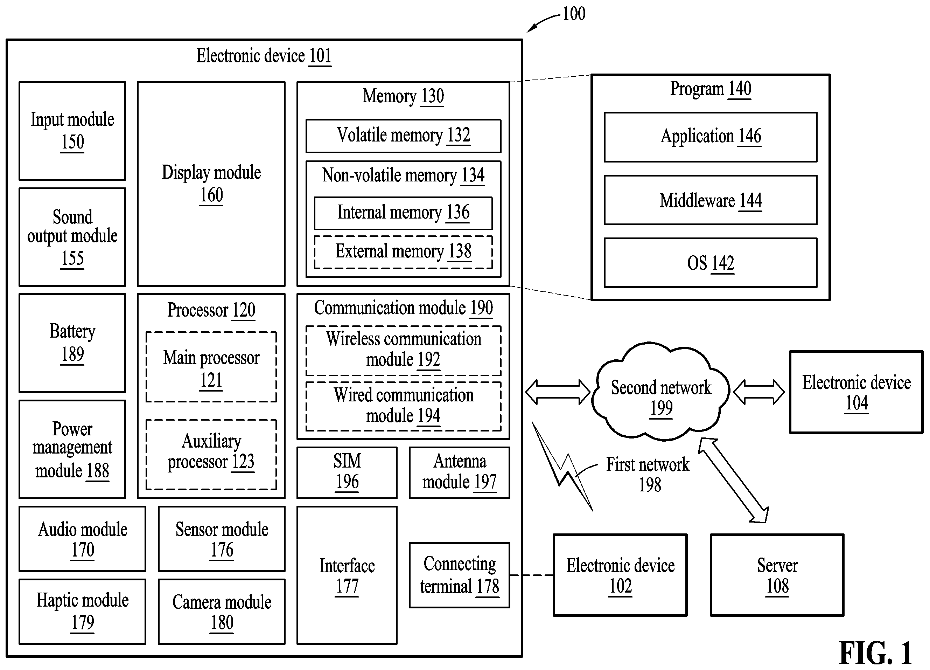

FIG. 1 is a block diagram of an electronic device in a network environment according to an embodiment.

FIG. 1 is a block diagram of an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, a. input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be dedicated for a designated function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state, or together with the main processor 121 while the main processor 121 is an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. According to an embodiment, when instructions stored in the memory 130 are executed by at least one processor (e.g., the main processor 121 and/or the auxiliary processor 123) individually or collectively, the instructions may cause the electronic device 101 to perform one or more operations. For example, the instructions stored in the memory 130 may be executed by one processor (e.g., the main processor 121 or the auxiliary processor 123 such as a CP) or a plurality of processors (e.g., the main processor 121 and the auxiliary processor 123) operating cooperatively.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, and the projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or headphones) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic apparatus 101 and the external electronic apparatus 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "first," "second," "first," or "second" may be used simply to distinguish one component from another and may not limit the components with respect to other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

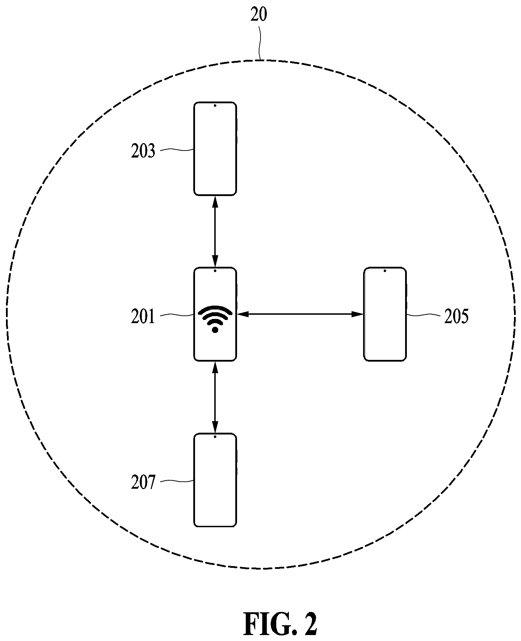

FIG. 2 is a diagram illustrating a network environment according to an embodiment.

Referring to FIG. 2, according to an embodiment, according to an embodiment, an electronic device 201 (e.g., the electronic device 101 of FIG. 1) may broadcast a wireless communication signal. For example, the electronic device 201 (e.g., a mobile device with an access point (AP) and WLAN hotspot functions) may create a wireless network (e.g., a wireless local area network (WLAN)) by broadcasting a Wi-Fi signal.

According to an embodiment, a physical location for accessing the Internet via the WLAN created by the electronic device 201 may be referred to as a hotspot 20, and an ability of the electronic device 201 to share Internet connection of the electronic device 201 with other devices (e.g., external electronic devices (e.g., an external electronic device 203, an external electronic device 205, and/or an external electronic device 207) may be referred to as a hotspot function.

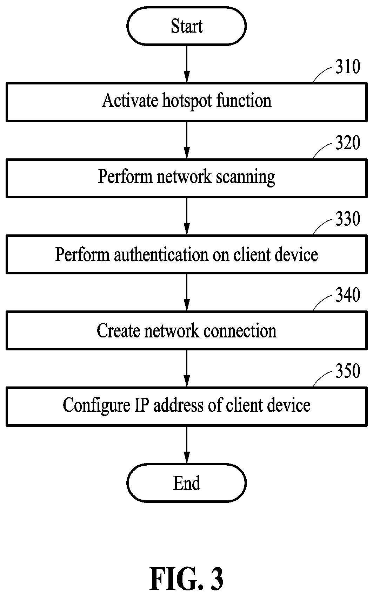

According to an embodiment, each of one or more external electronic devices (e.g., the external electronic device 203, the external electronic device 205, and/or the external electronic device 207) around the electronic device 201 may create a network connection with the electronic device 201. A procedure to create a network connection is further described with reference to FIG. 3. Each of the external electronic devices (e.g., the external electronic device 203, the external electronic device 205, and/or the external electronic device 207) may communicate with the electronic device 201 and/or other external electronic devices networked with the electronic device 201 via the created network connection.

According to an embodiment, the electronic device 201 may provide Internet access to the external electronic devices (e.g., the external electronic device 203, the external electronic device 205, and/or the external electronic device 207) by sharing the Internet connection (or data traffic) of the electronic device 201 with the external electronic devices (e.g., the external electronic device 203, the external electronic device 205, and/or the external electronic device 207) via the created network connection.

FIG. 3 is a flowchart of a process for network connection according to an embodiment.

Referring to FIG. 3, according to an embodiment, operations 310 to 350 may be operations performed by electronic devices (e.g., an AP device and a client device) to generate a network connection (e.g., Wi-Fi connection) between electronic devices.

In operation 310, an electronic device (e.g., the electronic device 101 of FIG. 1 or the electronic device 201 of FIG. 2) may activate a hotspot function (e.g., a WLAN hotspot function) of the electronic device 101 or 201.

In operation 320, the electronic device (e.g., the electronic device 101 of FIG. 1 or the electronic device 201 of FIG. 2) and/or an external electronic device (e.g., the external electronic device 203, the external electronic device 205, and/or the external electronic device 207 of FIG. 2) may perform scanning for networks. For example, the external electronic devices (e.g., client devices, such as the external electronic devices of FIG. 2 (e.g., the external electronic device 203, the external electronic device 205, and/or the external electronic device 207)) may wait for reception (listen) of a beacon frame broadcasted by the electronic device 101 or 201 (e.g., passive scanning). The beacon frame may include information about a network (e.g., a service set identifier (SSID) and a supported data rate). In another example, the external electronic devices (e.g., the external electronic device 203, the external electronic device 205, and/or the external electronic device 207) may transmit a probe request frame to the electronic device 101 or 201 to discover the network. After receiving the probe request frame, the electronic device 101 or 201 may transmit a probe response frame to the external electronic devices (e.g., the external electronic device 203, the external electronic device 205, and/or the external electronic device 207).

In operation 330, the electronic device (e.g., the electronic device 101 of FIG. 1 or the electronic device 201 of FIG. 2) and/or the external electronic device (e.g., the external electronic device 203, the external electronic device 205, and/or the external electronic device 207 of FIG. 2) may perform authentication on the external electronic device (e.g., the external electronic device 203, the external electronic device 205, and/or the external electronic device 207). The external electronic device (e.g., the external electronic device 203, the external electronic device 205, and/or the external electronic device 207) may transmit an authentication request frame to the electronic device 101 or 201. After receiving the authentication request frame, the electronic device 101 or 201 may transmit an authentication response frame to the external electronic devices (e.g., the external electronic device 203, the external electronic device 205, and/or the external electronic device 207). According to an embodiment, an authentication process for the external electronic device (e.g., the external electronic device 203, the external electronic device 205, and/or the external electronic device 207) may be omitted. For example, when a network security type is open security, the authentication process may be omitted.

In operation 340, the electronic device (e.g., the electronic device 101 of FIG. 1 or the electronic device 201 of FIG. 2) and/or the external electronic device (e.g., the external electronic device 203, the external electronic device 205, and/or the external electronic device 207 of FIG. 2) may generate network association. The external electronic device (e.g., the external electronic device 203, the external electronic device 205, and/or the external electronic device 207) may transmit an association request frame to the electronic device 101 or 201. After receiving the association request frame, the electronic device 101 or 201 may transmit an association response frame to the external electronic device (e.g., the external electronic device 203, the external electronic device 205, and/or the external electronic device 207).

In operation 350, the electronic device (e.g., the electronic device 101 of FIG. 1 or the electronic device 201 of FIG. 2) and/or the external electronic device (e.g., the external electronic device 203, the external electronic device 205, and/or the external electronic device 207 of FIG. 2) may configure an Internet protocol (IP) address of the external electronic device (e.g., the external electronic device 203, the external electronic device 205, and/or the external electronic device 207 of FIG. 2). The external electronic device (e.g., the external electronic device 203, the external electronic device 205, and/or the external electronic device 207) may be assigned an IP based on a dynamic host configuration protocol (DHCP). For example, the external electronic device (e.g., the external electronic device 203, the external electronic device 205, and/or the external electronic device 207) may transmit a DHCP discover packet for requesting network configuration information to the electronic device 101 or 201. After receiving the DHCP discover packet, the electronic device 101 or 201 may transmit a DHCP offer packet to the external electronic device (e.g., the external electronic device 203, the external electronic device 205, and/or the external electronic device 207). The DHCP offer packet may include network configuration information, such as the IP of the external electronic device (e.g., the external electronic device 203, the external electronic device 205, and/or the external electronic device 207) and a subnet mask. According to an embodiment, when a static IP is used for communication between the electronic device (e.g., the electronic device 101 of FIG. 1 or the electronic device 201 of FIG. 2) and the external electronic device (e.g., the external electronic device 203, the external electronic device 205, and/or the external electronic device 207) rather than a dynamic IP, an IP address process may be omitted.

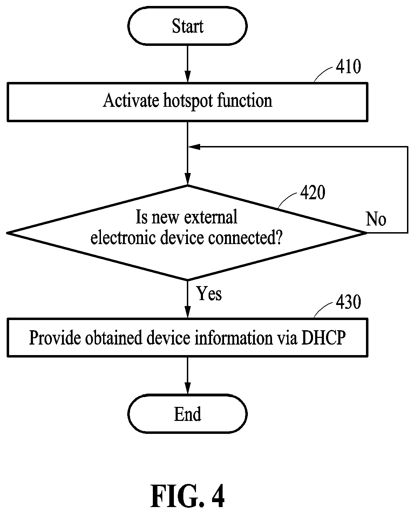

FIG. 4 is a flowchart of a process of providing device information according to an embodiment.

Referring to FIG. 4, according to an embodiment, operations 410 to 430 may be sequentially performed, but the embodiment is not limited thereto. For example, two or more operations may be performed in parallel.

In operation 410, an electronic device (e.g., the electronic device 101 of FIG. 1 or the electronic device 201 of FIG. 2) may activate a hotspot function (e.g., the WLAN hotspot function) of the electronic device 101 or 201. For example, when the electronic device 101 or 201 is a mobile device (e.g., a smartphone or a laptop) with the hotspot function, the electronic device 101 or 201 may activate the hotspot function in response to a user input. For example, when the electronic device 101 or 201 is an AP, as the electronic device 101 or 201 is turned on, the hotspot function of the electronic device 101 or 201 may be activated.

In operation 420, the electronic device 101 or 201 may detect (or determine) a new network connection (e.g., the Wi-Fi connection) between the electronic device 101 or 201 and an external electronic device (e.g., a client device, such as the external electronic device 203, the external electronic device 205, and/or the external electronic device 207).

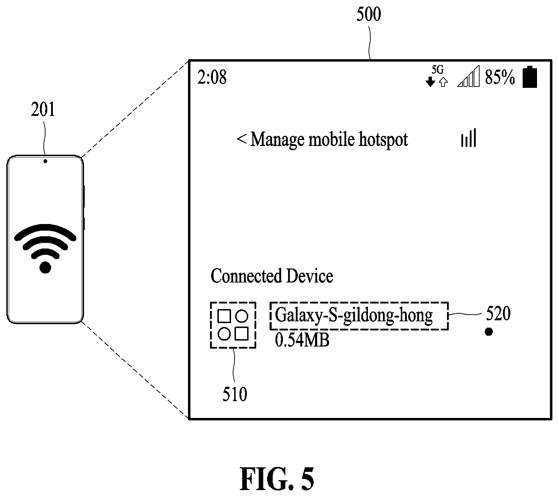

In operation 430, the electronic device 101 or 201 may obtain device information (e.g., a device name) about the external electronic device (e.g., the external electronic device 203, the external electronic device 205, and/or the external electronic device 207) that is newly connected to the electronic device 101 or 201 based on the DHCP. The electronic device 101 or 201 may provide the obtained device information to a user. For example, the electronic device 101 or 201 may output a user interface (UI) including the obtained device information on a display of the electronic device 101 or 201. The UI including the device information based on the DHCP is further described with reference to FIG. 5.

FIG. 5 is a diagram illustrating a UI according to an embodiment.

Referring to FIG. 5, according to an embodiment, a UI 500 may be provided to a user via a display of the electronic device 201 (e.g., the electronic device 101 of FIG. 1).

According to an embodiment, the UI 500 may include device information about an external electronic device (e.g., the external electronic device 203 of FIG. 2) having a network connection (e.g., the Wi-Fi connection) with the electronic device 201. The device information about the external electronic device 203 (e.g., a client device) included in the UI 500 may be obtained based on the DHCP.

According to an embodiment, the UI 500 may include a device name 520 of the external electronic device 203. The device information about the external electronic device 203 may be included in a specific field of a DHCP packet (or message) that is transmitted to assign an IP to the external electronic device 203. The field may refer to a specific part (or segment) of the DHCP packet. Since the DHCP uses American standard code for information interchange (ASCII), transmitting a device name written in languages other than English via the DHCP may be difficult. For example, when the device name of the external electronic device is set to English and Korean, such as "Galaxy-S- 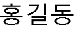 (Hong Gildong)", the device name of the external electronic device 203, transmitted to the electronic device 201, may be an English name, such as "Galaxy-S-gildong-hong".

According to an embodiment, the UI 500 may include an indicator 510 (e.g., an icon) for the external electronic device 203. However, since transmitting a type (e.g., a phone, a tablet, a laptop, a smartwatch, an augmented reality (AR)/virtual reality (VR) device, or an audio output device) of the external electronic device 203 to the electronic device 201 is difficult using the DHCP, the UI 500 may not provide accurate device type information about the external electronic device 203. For example, the UI 500 may include the indicator 510 (e.g., an icon) that always displays the type of the external electronic device 203 as "other device" regardless of the actual type of the external electronic device 203.

According to an embodiment, the electronic device 201 may use a multicast domain name system (mDNS) protocol to provide the user with the accurate device information about the external electronic device 203 connected to the electronic device 201.

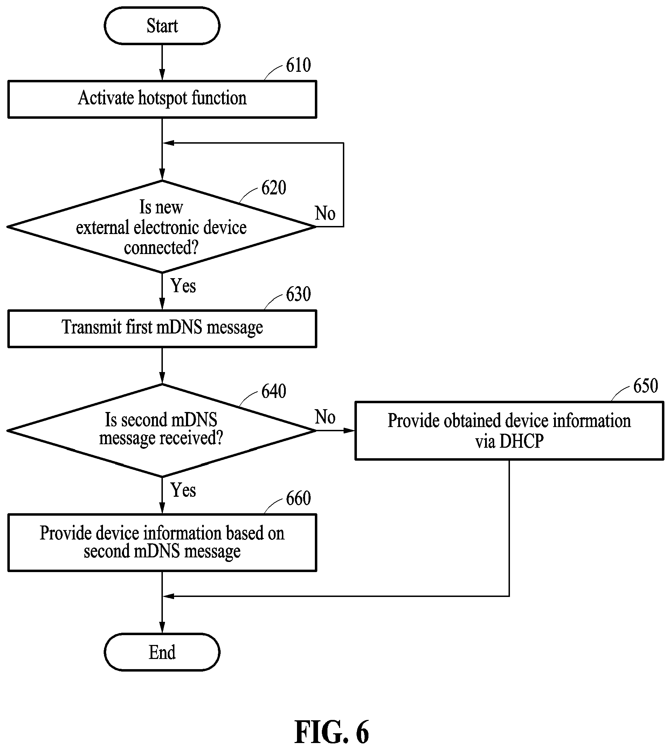

FIG. 6 is a flowchart of a process of providing device information according to an embodiment.

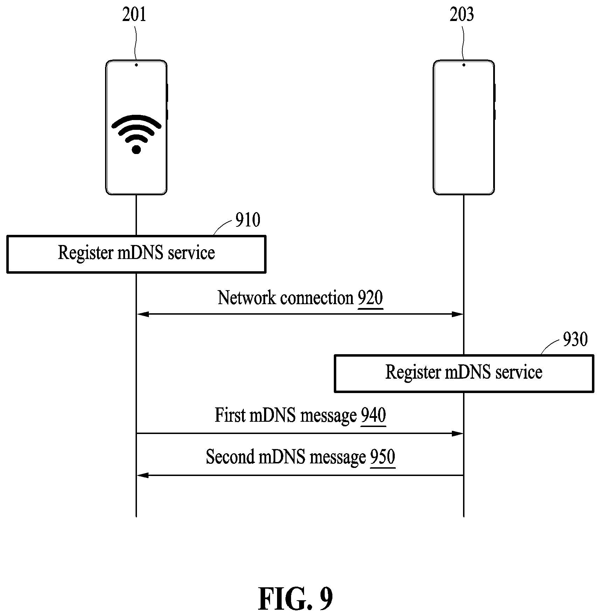

Referring to FIG. 6, according to an embodiment, operations 610 to 660 may be operations performed to describe a process of obtaining device information about an external electronic device (e.g., a client device, such as the external electronic devices of FIG. 2 (e.g., the external electronic device 203, the external electronic device 205, and/or the external electronic device 207)) connected to an electronic device (e.g., the electronic device 101 of FIG. 1 or the electronic device 201 of FIG. 2). The process of exchanging an mDNS message between the electronic device 101 or 201 and the external electronic device (e.g., the external electronic device 203, the external electronic device 205, and/or the external electronic device 207) is further described with reference to FIGS. 9 to 11. Operations 610 to 660 may be performed sequentially, but the embodiment is not limited thereto. For example, two or more operations may be performed in parallel.

In operation 610, the electronic device 101 or 201 may activate a hotspot function (e.g., the WLAN hotspot function) of the electronic device 101 or 201. For example, when the electronic device 101 or 201 is a mobile device (e.g., a smartphone or a laptop) with the hotspot function, the electronic device 101 or 201 may activate the hotspot function in response to a user input. For example, when the electronic device 101 or 201 is an AP, as the electronic device 101 or 201 is turned on, the hotspot function of the electronic device 101 or 201 may be activated.

In operation 620, the electronic device 101 or 201 may detect (or determine) a new network connection (e.g., the Wi-Fi connection) between the electronic device 101 or 201 and an external electronic device (e.g., the external electronic device 203, the external electronic device 205, and/or the external electronic device 207), wherein the new network connection is created based on the activated hotspot function (e.g., the hotspot function activated in operation 610).

In operation 630, the electronic device 101 or 201 may transmit a first mDNS message to the external electronic device (e.g., the external electronic device 203, the external electronic device 205, and/or the external electronic device 207) that is newly connected to the electronic device 101 or 201 via the created network connection. In other words, the electronic device 101 or 201 may transmit the first mDNS message to the external electronic device 203 while the network connection (e.g., the network connection created in operation 620) is provided to the external electronic device (e.g., the external electronic device 203, the external electronic device 205, and/or the external electronic device 207) in response to the activation of the hotspot function (e.g., the hotspot function activated in operation 610). The first mDNS message may be an mDNS query for requesting device information about the external electronic devices 203 to 207. In the present disclosure, mDNS messages may be exchanged between the electronic device 101 or 201 and the external electronic device (e.g., the external electronic device 203, the external electronic device 205, and/or the external electronic device 207) while the network connection (e.g., the network connection created in operation 620) is provided to the external electronic device (e.g., the external electronic device 203, the external electronic device 205, and/or the external electronic device 207) in response to the activation of the hotspot function of the electronic device 101 or 201. Hereinafter, a repeated description is omitted.

In operation 640, the electronic device 101 or 201 may determine whether a second mDNS message is received from the external electronic device (e.g., the external electronic device 203, the external electronic device 205, and/or the external electronic device 207). The second mDNS message may be an mDNS response transmitted to the electronic device 101 or 201 in response to the external electronic device (e.g., the external electronic device 203, the external electronic device 205, and/or the external electronic device 207) receiving the first mDNS message. The second mDNS message may include device information about the external electronic device (e.g., the external electronic device 203, the external electronic device 205, and/or the external electronic device 207). For example, the second mDNS message may include the device information as shown in Table 1.

**[Table 1]**

| **Field name** | **Meaning** | **Data Type** | **Values** |
|---|---|---|---|
| VIRSION | Protocol version | String | 1: version 1 |
| DEVICE_NAME | Client device name | String | |
| DEVICE_TYPE | Client device Type | Integer | 1: Phone |
| | | | 2: Tablet |
| | | | 3: Watch |
| | | | 4: VR |
| | | | 5: ... |
| ID | Client device ID | String | ID |
| APP_LIST | Running applications | String | |

According to an embodiment, the second mDNS message may include a name, a type, an identifier (ID) of the external electronic device (e.g., the external electronic device 203, the external electronic device 205, and/or the external electronic device 207), and/or information (e.g., an application list, an application category, and/or an application type) about an application executed by the external electronic device (e.g., the external electronic device 203, the external electronic device 205, and/or the external electronic device 207).

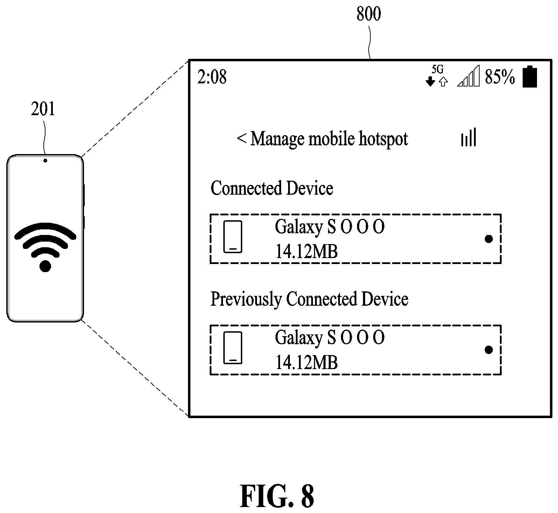

According to an embodiment, the ID of the external electronic device (e.g., the external electronic device 203, the external electronic device 205, and/or the external electronic device 207) included in the second mDNS message may be a unique ID of the external electronic device (e.g., the external electronic device 203, the external electronic device 205, and/or the external electronic device 207). For example, the ID may be a unique ID other than a media access control (MAC) address of the external electronic device (e.g., the external electronic device 203, the external electronic device 205, and/or the external electronic device 207). When a specific event (e.g., changing the name of the hotspot network, changing the security type, and changing a password of the electronic device 101 or 201) related to a property of the hotspot network of the electronic device 101 or 201 has occurred, based on the ID of the external electronic device (e.g., the external electronic device 203, the external electronic device 205, and/or the external electronic device 207) included in the second mDNS message, the electronic device 101 or 201 may accurately identify the external electronic device (e.g., the external electronic device 203, the external electronic device 205, and/or the external electronic device 207) and may provide the device information to the user. The UI for providing the device information based on the ID of the external electronic device (e.g., the external electronic device 203, the external electronic device 205, and/or the external electronic device 207) is further described with reference to FIG. 8.

In operation 650, in response to the determination that the second mDNS is not received, the electronic device 101 or 201 may provide the user with the device information (e.g., the device information obtained in operation 620) about the external electronic device (e.g., the external electronic device 203, the external electronic device 205, and/or the external electronic device 207) obtained via the DHCP. For example, when the second mDNS message is not received within a preset time (e.g., 5 seconds) after the first mDNS message is transmitted, the electronic device 101 or 201 may provide the user with the device information about the external electronic device (e.g., the external electronic device 203, the external electronic device 205, and/or the external electronic device 207) obtained via the DHCP. According to an embodiment, the electronic device 101 or 201 may transmit the first mDNS message multiple times (e.g., 5 times) based on a set time interval (e.g., 1 second) within the preset time (e.g., 5 seconds). According to an embodiment, when the second mDNS message is received after the preset time (e.g., 5 seconds) after the first mDNS message is transmitted, based on the second mDNS message, the electronic device 101 or 201 may update the device information about the external electronic device (e.g., the external electronic device 203, the external electronic device 205, and/or the external electronic device 207) obtained based on the DHCP. The electronic device 101 or 201 may provide the user with the device information about the external electronic device (e.g., the external electronic device 203, the external electronic device 205, and/or the external electronic device 207) that is updated based on the second mDNS message. Operation 650 may be substantially the same as operation 430 of FIG. 4. Accordingly, a repeated description thereof is omitted.

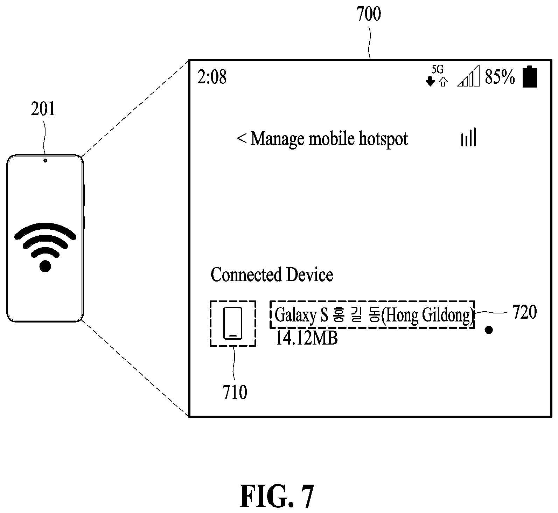

In operation 660, in response to the reception of the second mDNS message, the electronic device 101 or 201 may provide the device information about the external electronic device (e.g., the external electronic device 203, the external electronic device 205, and/or the external electronic device 207) to the user based on the second mDNS message. A UI including the device information based on an mDNS protocol is further described with reference to FIG. 7.

FIG. 7 is a diagram illustrating a UI according to an embodiment.

Referring to FIG. 7, according to an embodiment, a UI 700 may be provided to a user via a display of the electronic device 201 (e.g., the electronic device 101 of FIG. 1).

According to an embodiment, the UI 700 may include device information about an external electronic device (e.g., the external electronic device 203 of FIG. 2) having a network connection (e.g., the Wi-Fi connection) with the electronic device 201. The device information about the external electronic device 203 (e.g., the client device) included in the UI 700 may be obtained based on an mDNS protocol (e.g., an mDNS message).

According to an embodiment, the UI 700 may include a device name 720 of the external electronic device 203. Via an mDNS message (e.g., the second mDNS message received in operation 640 of FIG. 6), the external electronic device 203 may transmit the device name (e.g., an original device name) of the external electronic device 203 written in a language (e.g., Korean) other than English to the electronic device 201. For example, when the device name of the external electronic device 203 is set to English and Korean, such as "Galaxy-S- 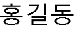 (Hong Gildong)", the external electronic device 203 may transmit the original device name "Galaxy-S- 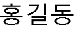 " to the electronic device 201 via the mDNS message. The electronic device 201 may provide the original device name of the external electronic device 203 to the user using the information included in the received mDNS message.

According to an embodiment, the UI 700 may include device type information of the external electronic device 203. For example, the UI 700 may include an indicator 710 (e.g., an icon or text) related to the type of the external electronic device 203. The external electronic device 203 may transmit the type (e.g., a phone, a tablet, a laptop, a smartwatch, an AR/VR device, or an audio output device) of the external electronic device 203 to the electronic device 201 via the mDNS message. The electronic device 201 may provide the device type information of the external electronic device 203 to the user using the information included in the received mDNS message.

According to an embodiment, the electronic device 201 may provide the user with an auditory UI including the device type information of the external electronic device 203 to the user or the auditory UI together with a visual UI (e.g., the UI 700).

FIG. 8 is a diagram illustrating a UI according to an embodiment.

Referring to FIG. 8, according to an embodiment, to provide a UI 800 including information about an external electronic device (e.g., a client device, such as the external electronic device 203 of FIG. 2) connected to the electronic device 201, the electronic device 201 may use an ID of the external electronic device 203 included in an mDNS message (e.g., the second mDNS message received in operation 640 of FIG. 6). The ID of the external electronic device 203 included in the mDNS message may be a unique ID. The electronic device 201 may provide accurate device information about the external electronic device 203 using the ID of the external electronic device 203 even though a specific event related to the electronic device 201 and/or the external electronic device 203 has occurred. For example, an android device (e.g., the electronic device 201 or the external electronic device 203) may use a random MAC address to prevent device tracking based on a MAC address. When the android device is connected to a new network (e.g., the Wi-Fi network), the android device may use the random MAC address instead of the MAC address of the android device. For example, when a property (e.g., the name of the hotspot network, the security type, and/or the password) of the hotspot network of the electronic device 201 connected to the external electronic device 203 is changed, an existing connection (e.g., the hotspot network connection) between the external electronic device 203 and the electronic device 201 may be disconnected, and the external electronic device 203 may determine the electronic device 201 as a new AP device. The external electronic device 201 may create a new connection with the electronic device 201 that is determined to be the new AP device using a new random MAC address. In this case, even though the random MAC address of the external electronic device 203 is changed, the electronic device 201 may accurately identify the external electronic device 203 using the ID of the external electronic device 203 included in the mDNS message (e.g., the mDNS message received from the external electronic device 203 after the existing connection with the external electronic device 201 is terminated) received from the external electronic device 203.

FIG. 9 is a flowchart of a procedure to exchange a multicast domain name system (mDNS) message according to an embodiment.

Referring to FIG. 9, according to an embodiment, operations 910 to 950 may be sequentially performed, but the embodiment is not limited thereto. For example, some operations (e.g., operations 910 to 930) may be performed in a different order, or two or more operations (e.g., operations 910 to 930) may be performed in parallel.

In operation 910, the electronic device 201 (e.g., the electronic device 101 of FIG. 1) may create (or register) an mDNS service. The electronic device 201 may create (or register) the mDNS service in response to activation of a hotspot function (e.g., the WLAN hotspot function) of the electronic device 201. For example, the electronic device 201 may create the mDNS service to use an mDNS message (e.g., an mDNS request). Operation 910 may be performed after operation 920 or 930 or may be performed in parallel with operations 920 and 930.

In operation 920, the electronic device 201 and an external electronic device (e.g., the external electronic device 203 of FIG. 2) may create a network connection (e.g., the Wi-Fi connection). To create the network connection, the electronic device 201 and the external electronic device 203 may perform a network connection creation process (e.g., operations 310 to 350 of FIG. 3). The external electronic device 203 may be assigned an IP based on the DHCP.

In operation 930, the external electronic device 203 may create (or register) an mDNS service. For example, the external electronic device 203 may create the mDNS service to register information to be included in an mDNS message (e.g., an mDNS response).

In operation 940, the electronic device 201 may transmit, to the external electronic device 203, a first mDNS message (e.g., the first mDNS message transmitted in operation 630 of FIG. 6) for requesting the device information about the external electronic device 203.

In operation 950, the electronic device 201 may receive a second mDNS message (e.g., the second mDNS message received in operation 640 of FIG. 6) from the external electronic device 203. The second mDNS message may include the device information about the external electronic device 203. For example, the second mDNS message may include the name, type, ID, IP, MAC address, security type, supported band (e.g., 2.4 GHz, 5 GHz, and/or 6 GHz) of the external electronic device 203, and/or information (e.g., the application list, the application category, and/or the application type) about applications executed by the external electronic device 203.

According to an embodiment, the electronic device 201 may provide a UI (e.g., the UI 700 of FIG. 7 or the UI 800 of FIG. 8) based on the device information (e.g., the name, type, and/or ID of the external electronic device 203) about the external electronic device 203 included in the received second mDNS message.

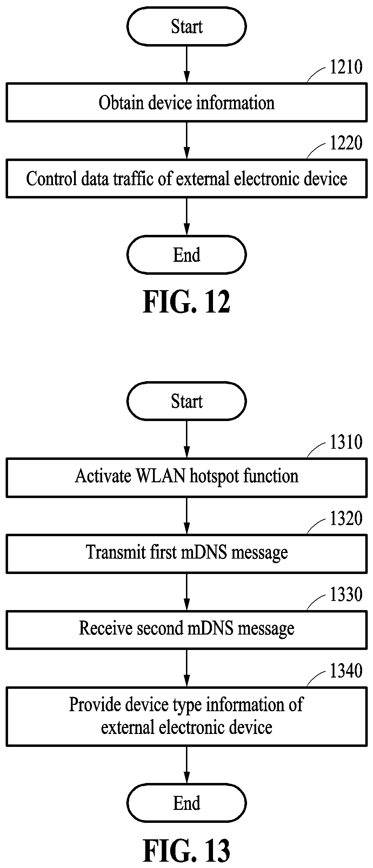

According to an embodiment, the electronic device 201 may control data traffic for the external electronic device 203, based on the device information (e.g., the type of the external electronic device 203 and/or the information about the application executed by the external electronic device 203) about the external electronic device 203 included in the received second mDNS message. A process of controlling the data traffic is further described with reference to FIG. 12.

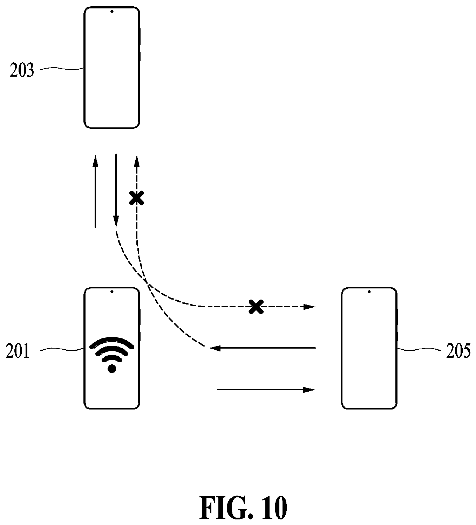

FIG. 10 is a diagram illustrating an example of blocking an mDNS message according to an embodiment.

Referring to FIG. 10, according to an embodiment, among external electronic devices (e.g., the external electronic device 203 and the external electronic device 205) (e.g., the client devices) having a network connection (e.g., the Wi-Fi connection) with the electronic device 201, the electronic device 201 may block an mDNS message related to a device (e.g., an external electronic device (e.g., the external electronic device 205)) other than a target device (e.g., the external electronic device 203). For example, the electronic device 201 may not forward a packet (e.g., the mDNS message) received from the other device (e.g., the external electronic device 205) to the target device (e.g., the external electronic device 203). The electronic device 201 may also block a message related to the target device (e.g., the external electronic device 203). For example, the electronic device 201 may not forward a packet (e.g., the mDNS message) received from the target device (e.g., the external electronic device 203) to the other device (e.g., the external electronic device 205). According to an embodiment, the electronic device 201 may reduce unnecessary power consumption by blocking the mDNS message related to the external electronic devices (e.g., the external electronic device 205 and the external electronic device 207) other than the target device 203.

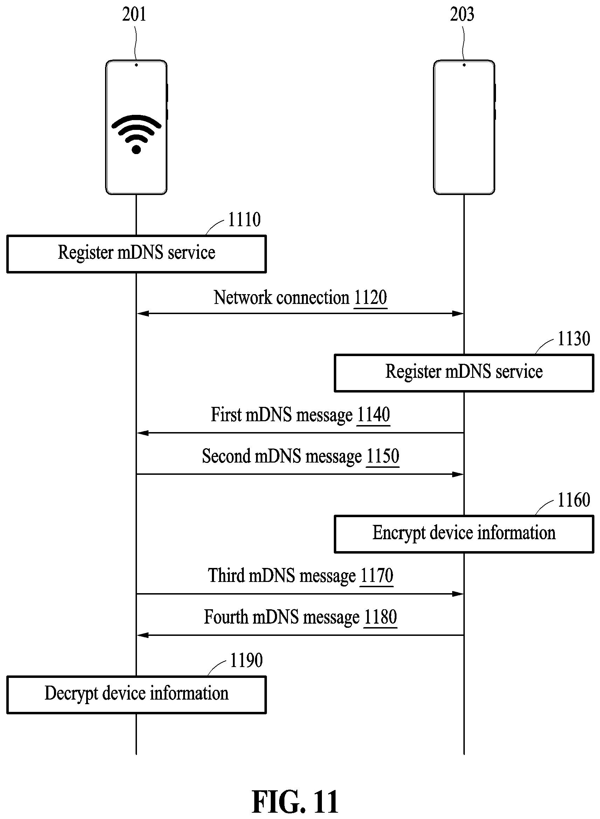

FIG. 11 is a flowchart of an mDNS message exchange procedure according to an embodiment. FIG. 11 may be a diagram illustrating a process of encrypting device information and transmitting the encrypted device information via an mDNS message.

Referring to FIG. 11, according to an embodiment, operations 1110 to 1190 may be sequentially performed, but the embodiment is not limited thereto. For example, some operations (e.g., operations 1110 to 1130) may be performed in a different order, two or more operations may be performed in parallel, or one or more operations (e.g., operation 1140) may be omitted.

In operation 1110, the electronic device 201 (e.g., the electronic device 101 of FIG. 1) may create (or register) an mDNS service. In response to activation of a hotspot function of the electronic device 201, the electronic device 201 may create the mDNS service. For example, the electronic device 201 may specify information required for a client to use the mDNS service, such as the name or type of the mDNS service. The electronic device 201 may generate an encryption key before, after, or together with the creation of the mDNS service. Based on a network environment, the electronic device 201 may generate the encryption key based on symmetric encryption or asymmetric encryption. For example, when the electronic device 201 is able to securely share the encryption key with an external electronic device (e.g., the external electronic device 203 of FIG. 2), the electronic device 201 may generate the encryption key based on symmetric encryption. In another example, when securely sharing the encryption key with the external electronic device 203 is difficult, the electronic device 201 may generate the encryption key based on asymmetric encryption. Operation 1110 may be performed after operation 1120 or 1130, or may be performed in parallel with operations 1120 and 1130.

In operation 1120, the electronic device 201 and the external electronic device 203 may create a network connection (e.g., the Wi-Fi connection). To create the network connection, the electronic device 201 and the external electronic device 203 may perform a network connection creation process (e.g., operations 310 to 350 of FIG. 3). The external electronic device 203 may be assigned an IP based on the DHCP.

In operation 1130, the external electronic device 203 may create (or register) an mDNS service.

In operation 1140, the external electronic device 203 may transmit a first mDNS message (e.g., an mDNS query) for requesting the encryption key (e.g., a public key) to the electronic device 201. According to an embodiment, an operation of the external electronic device 203 to transmit the first mDNS message may be omitted.

In operation 1150, in response to the reception of the first mDNS message, the electronic device 201 may transmit a second mDNS message (e.g., an mDNS response). The second mDNS message may include the encryption key (e.g., the public key) generated by the electronic device 201.

According to an embodiment, when operation 1140 is omitted, the electronic device 201 may transmit the second mDNS message to the external electronic device 203 based on a predetermined policy, regardless of the reception of the first mDNS message. For example, when a predetermined time has elapsed since the network connection (e.g., the network connection created in operation 1120) between the electronic device 201 and the external electronic device 203 is created, the electronic device 201 may transmit the second mDNS message to the external electronic device 203.

In operation 1160, the external electronic device 203 may encrypt the device information (e.g., the device information shown in Table 1) of the external electronic device 203 using the encryption key (e.g., the public key) included in the received second mDNS message.

In operation 1170, the electronic device 201 may transmit a third mDNS message (e.g., an mDNS query) for requesting the device information of the external electronic device 203 to the external electronic device 203.

In operation 1180, the electronic device 201 may receive a fourth mDNS message (e.g., an mDNS response) from the external electronic device 203. The fourth mDNS message may include the encrypted device information of the external electronic device 203.

In operation 1190, the electronic device 201 may decrypt the encrypted device information included in the fourth mDNS message using an encryption key (e.g., a private key) corresponding to the encryption key (e.g., the public key) that is used to encrypt the device information of the external electronic device 203.

According to an embodiment, the electronic device 201 may provide a UI (e.g., the UI 700 of FIG. 7 or the UI 800 of FIG. 8) based on the device information (e.g., the name, type, and/or ID of the external electronic device 203) of the external electronic device 203 reconstructed through decryption.

According to an embodiment, the electronic device 201 may control data traffic for the external electronic device 203 based on the device information (e.g., the type of the external electronic device 203 and/or information about an application executed by the external electronic device 203) of the external electronic device 203 reconstructed through decryption. A process of controlling the data traffic is further described with reference to FIG. 12.

FIG. 12 is a diagram illustrating data traffic control according to an embodiment according to an embodiment.

Referring to FIG. 12, according to an embodiment, operations 1210 and 1220 may be sequentially performed, but the embodiment is not limited thereto. For example, operations 1210 and 1220 may be performed in parallel.

In operation 1210, an electronic device (e.g., the electronic device 101 of FIG. 1 or the electronic device 201 of FIG. 2) may obtain device information of each of external electronic devices (e.g., the external electronic devices of FIG. 2 (e.g., the external electronic device 203, the external electronic device 205, and/or the external electronic device 207) having a network connection (e.g., the Wi-Fi connection) with the electronic device 101 or 201. For example, the electronic device 101 or 201 may obtain the type of the external electronic device and/or information about an application (e.g., the application list, the application category, and/or the application type) executed by the external electronic device.

In operation 1220, the electronic device 101 or 201 may control data traffic for the external electronic devices (e.g., the external electronic device 203, the external electronic device 205, and/or the external electronic device 207) based on the device information of the external electronic device (e.g., the external electronic device 203, the external electronic device 205, and/or the external electronic device 207). For example, the electronic device 101 or 201 may determine a priority of the data traffic for the external electronic devices (e.g., the external electronic device 203, the external electronic device 205, and/or the external electronic device 207). In another example, the electronic device 101 or 201 may manage a bandwidth (e.g., a channel bandwidth) allocated to the external electronic devices (e.g., the external electronic device 203, the external electronic device 205, and/or the external electronic device 207).

According to an embodiment, the electronic device 101 or 201 may control the data traffic for the external electronic devices (e.g., the external electronic device 203, the external electronic device 205, and/or the external electronic device 207) based on the type of the external electronic devices (e.g., the external electronic device 203, the external electronic device 205, and/or the external electronic device 207). For example, the electronic device 101 or 201 may preferentially process the data traffic for an external electronic device using real-time data traffic, such as a VR device, among the external electronic devices (e.g., the external electronic device 203, the external electronic device 205, and/or the external electronic device 207). In another example, the electronic device 101 or 201 may allocate a channel having a wide bandwidth to the external electronic device.

According to an embodiment, the electronic device 101 or 201 may control the data traffic for the external electronic devices (e.g., the external electronic device 203, the external electronic device 205, and/or the external electronic device 207) based on the category (or type) of applications executed by the external electronic devices (e.g., the external electronic device 203, the external electronic device 205, and/or the external electronic device 207). For example, the electronic device 101 or 201 may classify the applications into a first application using real-time data traffic and a second application using non-real-time data traffic. The electronic device 101 or 201 may set a priority of data traffic for an external electronic device executing the first application to be higher than a priority of data traffic for an external electronic device executing the second application. In another example, the electronic device 101 or 201 may further divide the category of applications into a plurality of categories (or types), such as a real-time application, an interactive application (e.g., messaging), a transaction application (e.g., a banking application), or a background application. The electronic device 101 or 201 may control the data traffic based on the divided categories of applications.

FIG. 13 is a flowchart illustrating an operation of an electronic device according to an embodiment.

Referring to FIG. 13, according to an embodiment, operations 1310 to 1330 may be sequentially performed, but the embodiment is not limited thereto. For example, two or more operations may be performed in parallel. Operations 1310 to 1330 may be substantially the same as the operations of the electronic device (e.g., the electronic device 101 of FIG. 1 or the electronic device 201 of FIG. 2) described with reference to FIGS. 1 to 12. Accordingly, a repeated description thereof is omitted.

In operation 1310, the electronic device 101 or 201 may activate a WLAN hotspot function of the electronic device 101 or 201.

In operation 1320, the electronic device 101 or 201 may transmit a first mDNS message for requesting device information to an external electronic device (e.g., the external electronic device 203 of FIG. 2).

In operation 1330, the electronic device 101 or 201 may receive a second mDNS message including the device information of the external electronic device 203 from the external electronic device 203.

In operation 1340, based on the device information included in the second mDNS message, the electronic device 101 or 201 may provide device type information of the external electronic device 203 on a display of the electronic device 101 or 201.

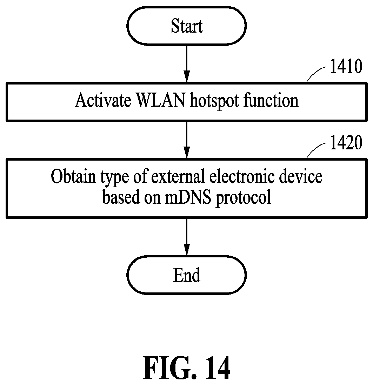

FIG. 14 is a flowchart illustrating an operation of an electronic device according to an embodiment.

Referring to FIG. 14, according to an embodiment, operations 1410 and 1420 may be sequentially performed, but the embodiment is not limited thereto. For example, operations 1410 and 1420 may be performed in parallel. Operations 1410 and 1420 may be substantially the same as the operations of the electronic device (e.g., the electronic device 101 of FIG. 1 or the electronic device 201 of FIG. 2) described with reference to FIGS. 1 to 12. Accordingly, a repeated description thereof is omitted.

In operation 1410, the electronic device 101 or 201 may activate a WLAN hotspot function of the electronic device 101 or 201.

In operation 1420, the electronic device 101 or 201 may obtain a type of an external electronic device (e.g., the external electronic device 203 of FIG. 2) based on an mDNS protocol.

The electronic device 101 or 201 according to an embodiment may include the processor 120 and the memory 130 storing instructions. The instructions, when individually or collectively executed by the processor 120, may cause the electronic device 101 or 201 to activate a WLAN hotspot function of the electronic device 101 or 201. The instructions, when individually or collectively executed by the processor 120, may cause the electronic device 101 or 201 to, while a network connection is provided to an external electronic device 203 based on activation of the WLAN hotspot function, transmit a mDNS message for requesting device information to the external electronic device 203. The instructions, when individually or collectively executed by the processor 120, may cause the electronic device 101 or 201 to, while the network connection is provided to the external electronic device 203 based on the activation of the WLAN hotspot function, receive a second mDNS message including the device information of the external electronic device 203 from the external electronic device 203. The instructions, when individually or collectively executed by the processor 120, may cause the electronic device 101 or 201 to, based on the device information included in the second mDNS message, provide device type information of the external electronic device 203 on a display of the electronic device 101, 201.

The external electronic device 203 may be assigned(or receive) an IP based on a DHCP before the first mDNS message is transmitted.

The second mDNS message may include at least one of a name, a type, a supported bandwidth, an identifier of the external electronic device 203, and information about an application executed by the external electronic device 203.

The information about the application executed by the external electronic device 203 may include information about a type of the application executed by the external electronic device 203. The instructions, when individually or collectively executed by the at least one processor 120, may cause the electronic device 101, 201 to control data traffic for the external electronic device 203 based on the second mDNS message.

The instructions, when individually or collectively executed by the at least one processor 120, may cause the electronic device 101, 201 to transmit a third mDNS message (e.g., the second mDNS message of FIG. 11) including an encryption key to the external electronic device 203 before the first mDNS message (e.g., the third mDNS message of FIG. 11) is transmitted.

The instructions, when individually or collectively executed by the at least one processor 120, may cause the electronic device 101, 201 to receive, from the external electronic device 203, a second mDNS message (e.g., the fourth mDNS message of FIG. 11) including device information of the external electronic device 203 encrypted by the encryption key.

The instructions, when individually or collectively executed by the at least one processor 120, may cause the electronic device 101, 201 to, among external electronic devices 203, 205, and 207 communicating with the electronic device 101, 201 via network connections created based on the activation of the WLAN hotspot function, block an mDNS message received from devices other than the external electronic device 203 from being forwarded to the external electronic device 203.

The instructions, when individually or collectively executed by the at least one processor 120, may cause the electronic device 101, 201 to transmit the third mDNS message to the external electronic device 203 in response to receiving a fifth mDNS message (e.g., the first mDNS message of FIG. 11) from the external electronic device 203.

The method of operating the electronic device 101, 201 according to an embodiment may include a WLAN hotspot function of the electronic device 101, 201. The method may include, while a network connection is provided to an external electronic device 203 based on activation of the WLAN hotspot function, transmitting a first mDNS message for requesting device information to the external electronic device 203. The method may include, while the network connection is provided to the external electronic device 203 based on the activation of the WLAN hotspot function, receiving a second mDNS message including the device information of the external electronic device 203 from the external electronic device 203. The method may include, based on the device information included in the second mDNS message, providing device type information of the external electronic device 203 on a display of the electronic device 101, 201.

The external electronic device 203 may be assigned an IP based on the DHCP before the first mDNS message is transmitted.

The second mDNS message may include at least one of a name, a type, a supported bandwidth, an identifier of the external electronic device 203, and information about an application executed by the external electronic device 203.

The information about the application executed by the external electronic device 203 may include information about a type of the application executed by the external electronic device 203.

The method may further include controlling data traffic for the external electronic device 203 based on the second mDNS message.

The method may further include transmitting a third mDNS message (e.g., the second mDNS message of FIG. 11) including an encryption key to the external electronic device 203 before the first mDNS message (e.g., the third mDNS message of FIG. 11) is transmitted.

The receiving of the second mDNS message may include receiving, from the external electronic device 203, a second mDNS message (e.g., the fourth mDNS message of FIG. 11) including device information of the external electronic device 203 encrypted by the encryption key.

The method may further include, among external electronic devices 203, 205, and 207 communicating with the electronic device 101, 201 via network connections created based on the activation of the WLAN hotspot function, blocking an mDNS message received from devices other than the external electronic device 203 from being forwarded to the external electronic device 203.

The transmitting of the third mDNS message to the external electronic device 203 may include transmitting the third mDNS message to the external electronic device 203 in response to receiving a fifth mDNS message (e.g., the first mDNS message of FIG. 11) from the external electronic device 203.

The electronic device 101, 201 according to an embodiment may include at least one processor 120, and the memory 130 storing instructions. The instructions, when individually or collectively executed by the at least one processor 120, may cause the electronic device 101, 201 to activate a WLAN hotspot function of the electronic device 101, 201. The instructions, when individually or collectively executed by the at least one processor 120, may cause the electronic device 101, 201 to, while a network connection is provided to an external electronic device 203 based on activation of the WLAN hotspot function, obtain a device type of the external electronic device 203 based on an mDNS protocol.

According to an embodiment, a non-transitory computer-readable storage medium storing one or more computer programs may include instructions that cause a processor to perform the method.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "first," "second," "first," or "second" may be used simply to distinguish one component from another and may not limit the components with respect to other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The effects to be achieved are not limited to those described above, and other effects not mentioned above will be clearly understood by one of ordinary skill in the art from this document.

## Claims

1. An electronic device (101, 201) comprising:
at least one processor (120); and
memory (130) storing instructions,
wherein the instructions, when individually or collectively executed by the at least one processor (120), cause the electronic device (101, 201) to:
activate a wireless local area network (WLAN) hotspot function of the electronic device (101, 201),
while a network connection is provided to an external electronic device (203) based on activation of the WLAN hotspot function, transmit a first multicast domain name system (mDNS) message for requesting device information to the external electronic device (203),
while the network connection is provided to the external electronic device (203) based on the activation of the WLAN hotspot function, receive a second mDNS message comprising the device information of the external electronic device (203) from the external electronic device (203), and
based on the device information comprised in the second mDNS message, provide device type information of the external electronic device (203) on a display of the electronic device (101, 201).

2. The electronic device (101, 201) of claim 1,
wherein the external electronic device (203) is assigned an internet protocol (IP) based on a dynamic host configuration protocol (DHCP) before the first mDNS message is transmitted.

3. The electronic device (101, 201) of any one of claims 1 to 2,
wherein the second mDNS message comprises at least one of a name, a type, a supported bandwidth, an identifier of the external electronic device (203), and information about an application executed by the external electronic device (203).

4. The electronic device (101, 201) of any one of claims 1 to 3,
wherein the information about the application executed by the external electronic device (203) comprises information about a type of the application executed by the external electronic device (203).

5. The electronic device (101, 201) of any one of claims 1 to 4,
wherein the instructions, when individually or collectively executed by the at least one processor (120), further cause the electronic device (101, 201) to:
control data traffic for the external electronic device (203) based on the second mDNS message.

6. The electronic device (101, 201) of any one of claims 1 to 5,
wherein the instructions, when individually or collectively executed by the at least one processor (120), further cause the electronic device (101, 201) to:
transmit a third mDNS message comprising an encryption key to the external electronic device (203) before the first mDNS message is transmitted.

7. The electronic device (101, 201) of any one of claims 1 to 6,
wherein the instructions, when individually or collectively executed by the at least one processor (120), further cause the electronic device (101, 201) to:
receive, from the external electronic device (203), the second mDNS message comprising device information of the external electronic device (203) encrypted by the encryption key.

8. The electronic device (101, 201) of any one of claims 1 to 7,
wherein the instructions, when individually or collectively executed by the at least one processor (120), further cause the electronic device (101, 201) to:
among external electronic devices (203, 205, 207) communicating with the electronic device (101, 201) via network connections created based on the activation of the WLAN hotspot function, block an mDNS message received from devices other than the external electronic device (203) from being forwarded to the external electronic device (203).

9. The electronic device (101, 201) of any one of claims 1 to 8,
wherein the instructions, when individually or collectively executed by the at least one processor (120), further cause the electronic device (101, 201) to:
transmit the third mDNS message to the external electronic device (203) in response to receiving a fifth mDNS message from the external electronic device (203).

10. A method of operating an electronic device (101, 201), the method comprising:
activating a wireless local area network (WLAN) hotspot function of the electronic device (101, 201);
while a network connection is provided to an external electronic device (203) based on activation of the WLAN hotspot function, transmitting a first multicast domain name system (mDNS) message for requesting device information to the external electronic device (203);
while the network connection is provided to the external electronic device (203) based on the activation of the WLAN hotspot function, receiving a second mDNS message comprising the device information of the external electronic device (203) from the external electronic device (203); and
based on the device information comprised in the second mDNS message, providing device type information of the external electronic device (203) on a display of the electronic device (101, 201).

11. The method of claim 10,
wherein the external electronic device (203) is assigned an internet protocol (IP) based on a dynamic host configuration protocol (DHCP) before the first mDNS message is transmitted.

12. The method of any one of claims 10 to 11,
wherein the second mDNS message comprises at least one of a name, a type, a supported bandwidth, an identifier of the external electronic device (203), and information about an application executed by the external electronic device (203).

13. The method of any one of claims 10 to 12, further comprising:
controlling data traffic for the external electronic device (203) based on the second mDNS message.

14. The method of any one of claims 10 to 13, further comprising:
transmitting a third mDNS message comprising an encryption key to the external electronic device (203) before the first mDNS message is transmitted.

15. An electronic device (101, 201) comprising:
at least one processor (120); and
memory (130) storing instructions,
wherein the instructions, when individually or collectively executed by the at least one processor (120), cause the electronic device (101, 201) to:
activate a wireless local area network (WLAN) hotspot function of the electronic device (101, 201), and
while a network connection is provided to an external electronic device (203) based on activation of the WLAN hotspot function, obtain a device type of the external electronic device (203) based on a multicast domain name system (mDNS) protocol.
